# EUROPEAN PATENT APPLICATION

(11) **EP 3 336 348 A1**
(43) Date of publication of application: **20.06.2018**
(21) Application number: 17198842.1
(22) Date of filing: 27.10.2017
(51) Int. Cl.: F03D 7/04

(54) **OPERATING A WIND TURBINE**

(30) Priority: 14.12.2016 DE 102016224998
(71) Applicant: Siemens Wind Power A/S, DK-7330 Brande (DK)
(72) Inventor: Danielsen, Kim Billesoe, 7430 Ikast (DK); Esbensen, Thomas, 7400 Herning (DK)
(74) Representative: Aspacher, Karl-Georg

(57) **Abstract**

A method is proposed for operating a wind turbine, comprising the following steps:
a) operating the wind turbine on basis of a defined controller setting (122),
b) operating the wind turbine on basis of a first alternative controller setting (123),
c) capturing (131) a first performance information of the wind turbine operating according to the first alternative controller setting (123),
d) operating the wind turbine on basis of a second alternative controller setting (124),
e) capturing (133) a second performance information of the wind turbine operating according to the second alternative controller setting (124),
f) operating the wind turbine on basis of the captured first and second performance information.

Further, a wind turbine and a device as well as a computer program product and a computer readable medium are suggested for performing said method.

## Description

The invention relates to a method, a wind turbine and to a device for operating a wind turbine. In addition, an according computer program product and a computer readable medium are suggested.

Providing an optimal performance during operation of a wind turbine requires, inter alia, an optimal controller setting or an optimal configuration of the wind turbine, e.g., based on optimal set of operating parameters or an optimal configuration of one or more software functions.

Operating parameters may be, e.g., a blade pitch angle of at least one rotor blade of a wind turbine or an offset to a yaw angle adjustment of the wind turbine representing a misalignment of a rotor plane of the wind turbine towards a direction of incoming wind.

Each change or variation of one or more operating parameters during operation of the wind turbine may have significant impact on the performance of the wind turbine in relation to, e.g., power production, estimated wind speed, structural loading or acoustic noise emission of the wind turbine.

Operating a wind turbine based on an optimal set of operating parameters may result in an exemplary improvement of annual energy production up to 1-2% as well as in a significant reduction of structural loads and noise emission.

An optimal set of operating parameters may be derived, e.g., by use of a model representing the wind turbine and/or models of components of the wind turbine. However, to provide an optimal performance of the wind turbine an optimization of the operating parameters during operation of the wind turbine ("in the field") would be constructive due to applied model limitations or assumed simplifications of the wind turbine and/or due to unpredictable external conditions (wind, terrain, environment, etc) as well as possible deviations of the final product (production tolerances, calibration tolerances, etc) .

Optimizing the performance of the wind turbine may involve one or more comparing steps thereby evaluating, e.g., whether one set of given operating parameters results in a better performance than one or more alternative sets of operating parameters.

Dependent on the results of the comparing, controller settings like, e.g., operating parameters can be optimized by applying, e.g., recursive or an iterative optimization steps.

Comparing different sets of operating parameters may involve, e.g., a defined target function allowing an effective comparison of the performance of a wind turbine operating with different controller settings.

Thereby, the target function may reflect the outcome or performance of the wind turbine like, e.g., an improved power production or an improved load reduction.

Applying such kind of target functions may cause some problems as, e.g., the highly stochastic nature of wind makes it difficult to implement a straightforward optimization of operating parameters. As an example, fluctuation of incoming wind may hinder the intended evaluation or analysis of operating parameters captured by successive measurements.

US2006/0216148 refers to a method for controlling a wind turbine configured such that losses of yield, particularly as a result of variations in the conversion of the kinetic energy, e.g., in the rotor drive train and generator are minimized as far as possible. Thereby, at least one operational setting is varied within predefined limits.

US7,603,202 involves operating a target wind turbine with two different sets of operational parameters e.g. wind force. Target variables of the target turbine and reference output of a reference turbine are detected for both the sets. The variables are analyzed by evaluation of a quality level based on the reference output. The target turbine is operated with the set of operational parameters having the best quality level.

EP 2 679 813 A1 involves operating two wind turbines according to two parameter settings during two time periods. Operations of the wind turbines are evaluated by determining two results of a target function. The results are compared. The parameter settings are adapted based on the comparison to optimize the target function without using any reference results, where the parameters settings include settings for a set of operational parameters of the respective wind turbines.

The object is thus to overcome the aforementioned disadvantages and in particular to provide an improved approach for optimizing the operation of a wind turbine.

This problem is solved according to the features of the independent claims. Further embodiments result from the depending claims.

In order to overcome this problem, a method is provided for operating a wind turbine, comprising the following steps,
a) operating the wind turbine on basis of a defined controller setting,
b) operating the wind turbine on basis of a first alternative controller setting,
c) capturing a first performance information of the wind turbine operating according to the first alternative controller setting,
d) operating the wind turbine on basis of a second alternative controller setting,
e) capturing a second performance information of the wind turbine operating according to the second alternative controller setting,
f) operating the wind turbine on basis of the captured first and second performance information.

One aspect of the proposed solution is the intended optimization of a defined or predetermined controller setting of a wind turbine during operation resulting, e.g., in an improved performance of the wind turbine.

Controller setting may comprise, e.g., a configuration of software functions, a configuration of the controller and/or one or more operating parameters of the wind turbine.

Operating a wind turbine on basis of a defined controller setting may be an operation of the wind turbine according to a predetermined or defined working point (reflecting, e.g., a standard controller setting common to all wind turbines of the same model) allowing, e.g., an effective operation of the wind turbine dependent on one or more internal and/or external conditions like, e.g., wind speed, wind direction, temperature, rotor speed or pitch angle of a rotor blade.

An alternative controller setting (being different to the defined controller setting) may comprise
- a modified configuration of software functions,
- a modified configuration of the controller and/or
- at least one modified (e.g. changed or amended) operating parameter
allowing a performance comparison or evaluation of the wind turbine according to the proposed solution, i.e. based on different/alternative controller settings.

An operating parameter may be an information or value representing, e.g.,
- a blade pitch angle of at least one rotor blade of the wind turbine to optimize an angle-of-attack in relation to an increased power production or a decreased potential loading of the wind turbine, or
- an offset to a speed-power (or speed-torque) trajectory to optimize a tip speed ratio of a rotor blade (i.e. aerodynamics) in relation to an increased power production, or
- an offset to a wind direction alignment (e.g. "yaw-angle" of a rotor plane of the wind turbine) to optimize alignment of the wind turbine towards incoming wind in relation to an increased power production or a decreased loading of the wind turbine.

A set of operating parameter may comprise one or more of the aforementioned operating parameters.

Performance information may comprise at least one of the following information representing:
- power production of the wind turbine based on active electrical power, or
- an estimated wind speed, e.g., derived from current rotational speed, active electrical power, pitch angle and model-specific data, or
- a structural loading or load estimate

An example for determining an estimated wind speed is disclosed in WO 2010/139372.

The aforementioned performance information may be captured by use of suitable capturing and/or measurement means like, e.g., anemometers, strain gauge sensors or wind direction sensors.

The captured performance information may be recorded or stored in a data processing system allowing, e.g. a post-processing of the stored information at a later time.

The proposed solution focuses on a single wind turbine in order to gain the maximum or best possible optimization potential under the assumption that wind turbines of the same type located in a wind park are inherently different in construction, calibration and environmental conditions and thus may have different optimal controller settings.

According to one aspect of the proposed solution the wind turbine may be operated on basis of two or more different, i.e. alternative, controller settings thereby capturing or recording a variable of a target function on basis of each differing controller setting.

Preferably, the variable of the target function (also referred as "target variable") may represent the captured performance information wherein a captured value of the target variable may represent a value or amount of the performance information.

Based on the captured or recorded target variable (e.g. performance information) an effectiveness of the different/alternative controller settings is comparable allowing a performance optimization of the wind turbine.

Identifying an optimal controller setting of the wind turbine may be based on an algorithm following the aforementioned aspect:
During a first step, the wind turbine is operated on basis of a defined controller setting which may be also referred to as initial "baseline setting".

During following steps the initial baseline setting is modified in a stepwise alternating way by adding, e.g., a positive ("High-setting") or negative ("Low-setting") offset respectively to the baseline setting.

On a long term basis, the baseline setting may be changed or modified towards an optimum ("final optimum setting") based on comparisons of the outcome of statistical evaluations or calculations applied to the captured target variable during the High- and Low-setting.

It should be noted that the proposed solution may comprise operating the wind turbine on basis of a third step or further steps, i.e. on basis of a third or further alternative controller setting thereby capturing a third or further values of a target variable respectively wherein an optimized operation of the wind turbine may be achieved based on all the captured values of the target variable.

The initial baseline setting may be the standard controller setting common to all wind turbines of the same model type. In contrast, the final optimum setting is indicating the optimized controller setting valid for a specific wind turbine.

Operating the wind turbine in stepwise alternating way (High- and Low-setting) may be exemplary implemented as described hereinafter.

### Baseline setting:

The wind turbine is operated according to the defined working point representing the baseline setting allowing optimal power production of the wind turbine at below rated power. Optimal power production supposes the ability to apply an optimal pitch angle and to track the optimal rotor tip-speed ration (i.e. the ration of rotor shaft speed to effective wind speed) at below rated rotational speed of the wind turbine. This is reflected in the controller setting by adjusting a predetermined pitch angle as well as a generator (or converter) reference power or torque to balance the rotor aerodynamic torque. Below rated power the pitch angle is typically fixed in the variable-speed region and the power (or torque) reference is set as function of the rotational speed (or wind speed). Below rated power in the constant-speed region the pitch angle may be modified as a function of the power, torque or wind speed, while the power (or torque) reference is adjusted in order to maintain the desired speed. At rated power production, the blades are pitched out to maintain a constant power output.

### High-setting:

The wind turbine receives a first alternative controller setting initiating a modification or change of operation in response. For purpose of an exemplary explanation, the High-setting may represent an offset setting of "+2" in relation to an exemplary baseline setting of "0".

As an example, the offset setting may represent an offset value or information to be added or subtracted in relation to a given operating parameter like, e.g., an adjusted yaw-angle of the wind turbine. Also alternative mathematical combinations of the offset value may be possible.

A specific time interval is allowed to elapse in order to settle potential dynamics of the operational change thereby allowing the target variable (i.e. the performance information) to accurately reflect the performance of the wind turbine during the changed operating mode.

That specific time interval is also referred to as "Transition Phase" which exemplarily may comprise a range between 30 and 180 seconds.

According to an advanced embodiment a random factor or a random time interval (e.g. according to a time range between 0.1 and 1 second) may be added to the Transition Phase. In a wind farm comprising multiple installed wind turbines the use of a random factor prevents a situation where several wind turbines having the same inventive solution implemented are modifying their present controller setting at exactly the same point in time which otherwise might cause undesirable fluctuations in the operation of the electrical grid connected to the wind park. As an example, such fluctuation may be caused by a multiple number of wind turbines starting to modify their yaw-angle at the same time thereby demanding huge amount of energy.

The target variable, i.e. the amount or value of the target variable may be captured or recorded for a defined or predetermined time interval or time period. That time interval is also referred to as "Measurement Phase" which may comprise a range between 5 to 60 seconds.

### Low-setting:

The wind turbine receives a second alternative controller setting initiating a further change of operation accordingly. The second alternative controller setting may be, in relation to the baseline setting the opposite of the High-setting, i.e. "-2".

It should be noted that the absolute value of the offset setting may be selected independently in relation to High- and Low-setting.

Again, a specific time interval may be allowed ("Transition Phase) to pass in order to settle the potential dynamics of the operational change thereby allowing the target variable to accurately reflect the performance of the wind turbine during the further change of operating mode ("Transition Phase").

During the subsequent "Measurement Phase" the target variable is captured again for a defined time interval.

In an embodiment,
- the first alternative controller setting comprises at least one modified controller setting being modified according to a first modification rule, and
- the second alternative controller setting comprises at least one modified controller setting being modified according to a second modification rule.

Modification rule may be any kind of change, amendment or modification of the controller setting. Such kind of rule may be, e.g., a denoted step size or a mathematical or statistical rule.

In another embodiment, the method comprises the further steps
e1) operating the wind turbine on basis of at least one further alternative controller setting,
e2) capturing at least one further performance information of the wind turbine operating according to the at least one further alternative controller setting
wherein
the wind turbine is operated on basis of the captured first and second and the at least one further performance information.

Implementing further alternative controller setting may result in a more accurate optimization of the controller setting, i.e. a more accurate determination of the final optimum setting allowing an enhanced performance of the wind turbine.

In a further embodiment, the method comprises
- operating the wind turbine according to step b) and step c) for a predetermined first time interval thereby capturing the first performance information at least partly over the first time interval, and
- operating the wind turbine according to step d) and step e) for a predetermined second time interval thereby capturing the second performance information at least partly over the second time interval.

The first and second time interval may be equal or differ in duration of time.

Further, the first and second time interval may comprise a transition phase and a measurement phase respectively.

During a measurement phase one or more values of the target variable (performance information) may be recorded. Thereby, the target variable may be recorded over the whole time interval of the measurement phase or at least partly.

A set of values of the target variable recorded during the measurement phase may be assigned to a sample. Thereby, the assignment of the values may be on a basis of a mathematical rule like deriving an average of the respective recorded values of the target variable.

In a next embodiment, the method further comprises repeating step b) to e) a number of n times, thereby capturing n+1 first and second performance information of the wind turbine.

Repeating step b) to e) may be based on a cycle of alternations of the controller settings. A resulting set of recorded samples representing the outcome of multiple measurement phases implicates in an improved statistical strength over a single pair of samples.

It is also an embodiment thereby
- evaluating at least a part of the captured n+1 first and second performance information,
- operating the wind turbine based on the result of the evaluation.

The recorded performance information or sample may be classified as "valid" or "invalid" indicating it's consideration in a further or later processing being part of a more complex algorithm.

Pursuant to another embodiment, the performance information is represented by a variable of a target function.

According to an embodiment, the evaluation comprises an optimization of the target function based on a statistical analysis of the at least one part of the captured n+1 first and second performance information.

A cycle of alternating controller settings may be repeated a number of times, deriving or collecting a number of samples being paired to periods according to the proposed solution. After a predetermined number of periods have been collected, a statistical analysis may be performed to evaluate whether a significant difference between captured samples can be identified. The evaluation may be based on average information of respective samples.

According to another embodiment, the statistical analysis comprises a Student's T-test thereby determining whether the captured first and second performance information is differing, in particular is differing significantly.

In yet another embodiment, the performance information comprises at least one of the following information representing:
- power production of the wind turbine,
- an estimated wind speed,
- a structural loading

According to a next embodiment, the controller setting comprises at least one out of the following
- a configuration of software functions,
- a configuration of the controller and/or
- at least one operating parameter of the wind turbine.

Applying a controller setting based on at least one operating parameter may be exemplary implemented by
a) operating the wind turbine on basis of a defined set of operating parameters,
b) operating the wind turbine on basis of a first alternative set of the operating parameters,
c) capturing a first performance information of the wind turbine operating according to the first alternative set of the operating parameters,
d) operating the wind turbine on basis of a second alternative set of the operating parameters,
e) capturing a second performance information of the wind turbine operating according to the second alternative set of the operating parameters,
f) operating the wind turbine based on the captured first and second performance information.

According to a further embodiment, the at least one operating parameter is representing
- a blade pitch angle of at least one rotor blade, or
- an offset to a speed-power or speed-torque trajectory, or
- an offset to a yaw angle adjustment.

The problem stated above is also solved by a wind turbine comprising a processing unit that is arranged for,
a) operating the wind turbine on basis of a defined controller setting,
b) operating the wind turbine on basis of a first alternative controller setting,
c) capturing a first performance information of the wind turbine operating according to the first alternative controller setting,
d) operating the wind turbine on basis of a second alternative controller setting,
e) capturing a second performance information of the wind turbine operating according to the second alternative controller setting,
f) operating the wind turbine on basis of the captured first and second performance information.

The problem stated above is also solved by a device comprising and/or being associated with a processing unit and/or hard-wired circuit and/or a logic device that is arranged such that the method as described herein is executable thereon.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Embodiments of the invention are shown and illustrated in the following figures:
- Fig.1: shows an exemplary embodiment of operating a wind turbine according two alternative controller settings in relation to an initial baseline setting thereby operating the wind turbine on basis of captured performance information;
- Fig.2: shows an advanced embodiment of the proposed solution;
- Fig.3: shows an exemplary outcome of the present invention in form of a curve representing a number of modifications of the controller setting over an exemplary time interval of 60 days.

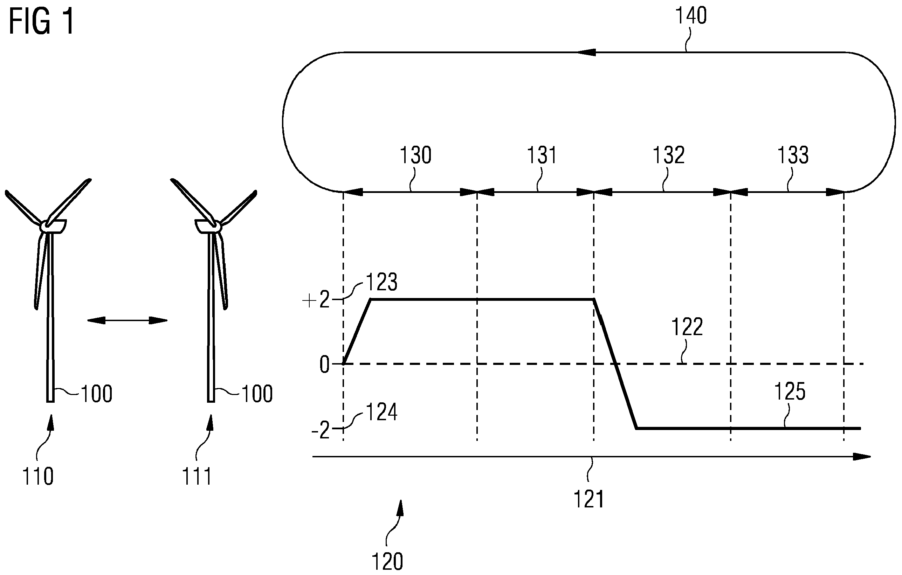

Fig.1 schematically shows on the left side a first and second exemplary scenario 110, 111 of a wind turbine 100 operating according to two alternative controller settings. According to the first scenario 110 the wind turbine 100 operates according to a "High-setting" representing, e.g., an adjusted yaw angle offset of "+2". Correspondingly, the wind turbine 100 operates according to a "Low-setting" in the second scenario 111 representing an adjusted yaw angle offset of "-2".

The right part of Fig.1 shows a graph 120 based on a time line 121 schematically illustrating an exemplary chronological sequence or cycle of a controller setting alternation on basis of the first and second scenario 110, 111. A curve 125 is representing an exemplary development of the alternating controller setting of the yaw angle offset.

Thereby, during a transition phase 130, the yaw angle of the wind turbine is changed or modified by an exemplary fictive offset setting "+2" ("High-setting") 123 in relation to an initial baseline setting "0" 122 representing an exact orientation of the wind turbine, i.e. of its rotor plane towards an incoming wind direction.

During a measurement phase 131 a performance information representing the target variable like, e.g., a current power production of the wind turbine is captured or recorded.

During a transition phase 132 the yaw angle of the wind turbine is modified again by an exemplary fictive offset setting "-2" ("Low-setting") 124 in relation to the initial baseline setting 122.

The resulting target variable is again captured during a measurement phase 133.

During each of both measurement phases 131, 133 one or more values of the target variable may be recorded respectively. Advantageously, a set of values of the target variable recorded during a measurement phase 131, 133 respectively may be assigned to a "sample".

A cycle of alternations of the controller settings as shown by the graph 120, including both transition phases 130, 132 and both measurement phases 131, 133 may be repeated a number of times (indicated by an arrow 140 in Fig.1). A resulting set of recorded samples representing the outcome of multiple measurement phases implicates in an improved statistical strength over a single run through of a cycle, i.e. a single pair of samples.

A sample may be classified as "valid" or "invalid" indicating it's possible consideration in a further or later processing being part of a more complex algorithm.

The validity of a recorded sample may be verified based on criteria reflecting whether the wind turbine was operating in a non-curtailed, i.e. normal operating mode during recording of the target variable in the measurement phase. Contrary to that, a sample may be deemed invalid whenever, e.g., environmental conditions have not been according to a normal operating mode during the measurement phase. Examples for a non-normal operating mode may be a wind speed beyond or below a predetermined upper or lower threshold value or a wind direction being outside a desired angular sector.

According to a next possible embodiment, the recorded samples may be grouped into "periods". As an example, each period may comprise two valid samples, e.g., with a first sample representing a valid sample ("High-sample") recorded during High-setting and a second sample representing a valid sample ("Low-sample") recorded during Low-setting.

Consequently, the number of periods is equal to or less than one half of the number of recorded samples. If a sample is classified as invalid it cannot be part of a period.

A period may comprise two consecutive valid samples, preferably either in an order High-Low-sample" or "Low-High-sample" to avoid introducing biases by a fixed scheme of selection.

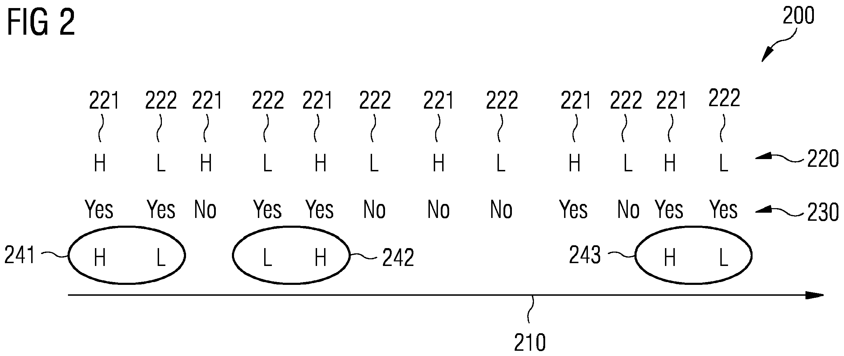

Fig.2 illustrated an exemplary schematic overview 200 of a possible selection of periods based on a sequence of samples.

On basis of time axis 210 a number of High-samples "H" and Low-samples "L" are shown in an alternating order (indicated by a reference number 220). A respective validity indicator (indicated by a reference number 230) is assigned to each sample wherein "yes" represents a valid sample and "no" represents an invalid sample.

According to an exemplary embodiment of the proposed solution two consecutive valid samples are selected or assigned to a "period" which is also referred as "pairing of valid High-samples and Low-samples" as exemplarily indicated by reference numbers 241, 242 and 243 in Fig.2.

As already indicated above, a cycle of alternating controller settings may be repeated a number of times, deriving or collecting, e.g., 40 up to 200 samples being paired to periods according to the proposed solution. After a predetermined number of periods have been collected, a statistical analysis may be performed on basis of the selected periods to evaluate whether a significant difference between captured High-samples and Low-samples can be identified. The evaluation may be based on average information of respective samples, i.e. based on the selected High-samples on average and based on the selected Low-samples on average.

The statistical analysis may be based on a Student's T-test determining whether two sets data, i.e. High-samples and Low-samples are significantly different to each other.

As exemplarily shown in Wikipedia:
https://en.wikipedia.org/wiki/Student's_t-test
a t-test is any statistical hypothesis test in which the test statistic follows a Student's t-distribution under the null hypothesis. It can be used to determine if two sets of data are significantly different from each other.

A t-test is most commonly applied when the test statistic would follow a normal distribution if the value of a scaling term in the test statistic were known. When the scaling term is unknown and is replaced by an estimate based on the data, the test statistics (under certain conditions) follow a Student's t distribution. See Wikipedia

As already mentioned before, one possible way to evaluate whether "High" (representing valid High Samples) or "Low" (representing Low Samples) is superior may be the calculation of the mean value (i.e. the average) of the target variable for each High samples and Low samples respectively.

Based on the method invented, several results or decisions may be possible:
Reset:
   The statistical test does not pass, i.e. there is no significant difference of the performance of the wind turbine based on recorded High-samples and Low-samples. As a consequence, there will be no modification of the current baseline controller setting.
Increase Offset:
   The statistical test passes thereby identifying a significant difference between turbine performance during High Sample and Low Sample with a positive outcome, i.e. the High Samples are representing superior performance. As a consequence, the current baseline controller setting is modified, i.e. increased by a defined or predetermined offset value ("denoted step size").
Decrease Offset:
   The statistical test passes thereby identifying a significant difference between turbine performance during High-sample and Low-sample with a negative outcome, i.e. the Low-samples are representing superior performance. As a consequence, the current baseline controller setting is decreased by a defined or predetermined offset value.

According to an advantageous embodiment of the present invention the baseline controller setting may be extended from a singular value (also referred to as "scalar") to a (multidimensional) vector or matrix of values thereby
- dividing the collected data or information into bins, and further
- extending the statistical analysis towards the aforementioned dimensionality.

In order to improve convergence of optimization it may be possible to utilize a variable step size, e.g., by applying a larger denoted step size at the beginning of the intended optimization of the controller setting to speed up optimization and by applying a smaller denoted step size after a predetermined time interval has passed.

Further possible options to improve the aforementioned optimization are
- applying a suitable number of optimization steps of
- a proper estimate of convergence quality
in order to improve the accuracy of convergence and/or to avoid oscillations around the final optimum setting.

A further option to improve the convergence of optimization may be a collection of a variable number of periods of valid samples to be collected before applying any statistical analysis.

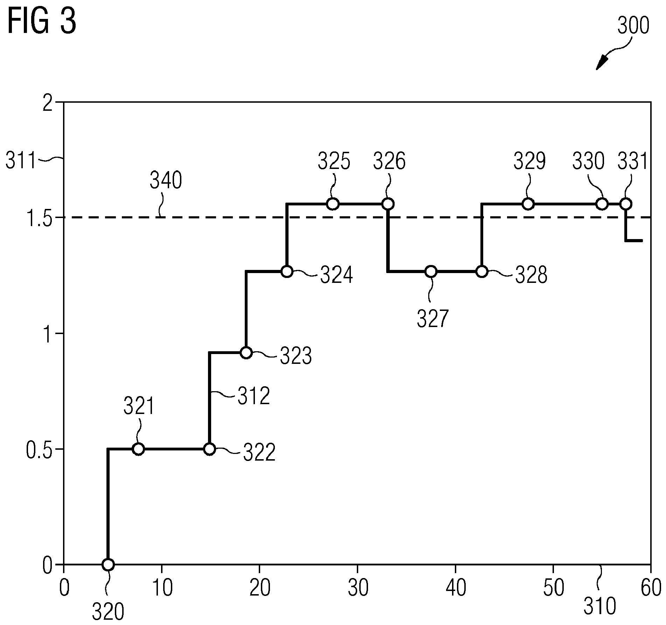

Fig.3 shows a graph 300 illustrating an exemplary outcome of the proposed solution based on a variation in time 310. Thereby, a curve 312 represents a number of decisions 320,..., 331, i.e. modifications of the controller settings over an exemplary time interval of 60 days. Each decision 320,...,331 is representing a modification of an offset setting represented by an ordinate 311 (e.g. offset setting of a yaw controller of the wind turbine) on basis of a statistical evaluation of valid samples as suggested by the method invented.

As an example, decision 320 is representing an "Increase Offset" i.e. increasing the offset setting by a predetermined amount ("denoted step size") of 0.5. Further on, decision 325 represents a "reset" without any modification of the offset setting. Decision 326, as a further example, is representing a "Decrease Offset" thereby reducing the offset setting by the denoted step size. According to the example of Fig.3, an optimal offset setting (represented by a dotted line 340) for the yaw controller of the wind turbine is settling down towards a final optimum setting of 1.5 after 60 days.

An aspect of the present invention relates to the possible optimization of the wind turbine controller settings during operation of the wind turbine without deeper knowledge about external requirements or environmental conditions like, e.g., the wind speed. The proposed solution can be applied to a number of different controller settings and to a number of different variables of a target function thereby overcoming, e.g., wind fluctuations and biases in power readings of a specific wind turbine.

According to a further aspect, the inventive optimization is less influenced by dynamic effects of changes or modifications of controller settings which may cause biases or noise in the measurement results ("samples") by applying a transition phase with a constant controller setting during the measurement phase. The method invented also shows a superior statistical performance based on a robust way of identifying a significant difference between different controller settings.

Further, the proposed solution does not require any installation or maintenance of a meteorological mast and thus not being limited to incoming wind coming from a direction of the mast in relation to the position of the wind turbine.

As a further advantage no reference turbines are necessary.

The inventive optimization of controller settings applies to a single wind turbine in order to gain the best possible optimization of individual wind turbines which may be part of a wind park and being inherently different in construction, calibration and environmental conditions. As a result, wind turbines of the same type may have different, i.e. individual optimized controller settings, i.e. final optimum settings, resulting in improved performance of the individual wind turbine and the wind park.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. Method for operating a wind turbine (100), comprising the following steps,
a) operating the wind turbine on basis of a defined controller setting (122),
b) operating the wind turbine on basis of a first alternative controller setting (123),
c) capturing (131) a first performance information of the wind turbine operating according to the first alternative controller setting (123),
d) operating the wind turbine on basis of a second alternative controller setting (124),
e) capturing (133) a second performance information of the wind turbine operating according to the second alternative controller setting (124),
f) operating the wind turbine on basis of the captured first and second performance information.

2. The method according to claim 1, wherein
- the first alternative controller setting comprises at least one modified controller setting being modified according to a first modification rule and
- the second alternative controller setting comprises at least one modified controller setting being modified according to a second modification rule.

3. The method according to claim 1 or 2, comprising the further steps
e1) operating the wind turbine on basis of at least one further alternative controller setting,
e2) capturing at least one further performance information of the wind turbine operating according to the at least one further alternative controller setting,
wherein
the wind turbine is operated on basis of the captured first and second and the at least one further performance information

4. The method according to any of the preceding claims, further comprising
- operating the wind turbine according to step b) and step c) for a predetermined first time interval thereby capturing the first performance information at least partly over the first time interval, and
- operating the wind turbine according to step d) and step e) for a predetermined second time interval thereby capturing the second performance information at least partly over the second time interval.

5. The method according to any of the preceding claims, further comprising
repeating step b) to e) a number of n times, thereby capturing n+1 first and second performance information of the wind turbine.

6. The method according to claim 5, wherein
- evaluating at least a part of the captured n+1 first and second performance information,
- operating the wind turbine based on the result of the evaluation.

7. The method according to any of the preceding claims,
wherein the performance information is representing a variable of a target function.

8. The method according to claim 7, wherein
the evaluation comprises an optimization of the target function based on a statistical analysis of the at least one part of the captured n+1 first and second performance information.

9. The method according to claim 8, wherein the statistical analysis comprises a Student's T-test thereby determining whether the captured first and second performance information is differing.

10. The method according to any of the preceding claims,
wherein the performance information comprises at least one of the following information representing:
- power production of the wind turbine,
- an estimated wind speed,
- a structural loading

11. The method according to any of the preceding claims,
wherein the controller setting comprises at least one out of the following
- a configuration of software functions,
- a configuration of the controller and/or
- at least one operating parameters of the wind turbine.

12. The method according to claim 11, wherein,
the at least one operating parameter is representing
- a blade pitch angle of at least one rotor blade, or
- an offset to a speed-power or speed-torque trajectory, or
- an offset to a yaw angle adjustment.

13. A wind turbine, comprising
a processing unit that is arranged for operating a wind turbine (100), comprising the following steps,
g) operating the wind turbine on basis of a defined controller setting (122),
h) operating the wind turbine on basis of a first alternative controller setting (123),
i) capturing (131) a first performance information of the wind turbine operating according to the first alternative controller setting (123),
j) operating the wind turbine on basis of a second alternative controller setting (124),
k) capturing (133) a second performance information of the wind turbine operating according to the second alternative controller setting (124),
1) operating the wind turbine on basis of the captured first and second performance information.

14. A device comprising and/or being associated with a processor unit and/or hard-wired circuit and/or a logic device that is arranged such that the method according to any of the preceding claims 1 to 12 is executable thereon.

15. A computer program product directly loadable into a memory of a digital computer, comprising software code portions for performing the steps of the method according to any of the claims 1 to 12.
